# FASCICULE DE BREVET EUROPEEN

(11) **EP 1 709 355 B1**
(45) Date de publication et mention de la délivrance du brevet: **16.03.2011**
(21) Numéro de dépôt: 05717494.8
(22) Date de dépôt: 26.01.2005
(51) Int. Cl.: F16L 3/12, E04G 21/18

(54) **SYSTEME POUR LE RACCORDEMENT D'UNE GAINE A LA SORTIE D'UNE DALLE**
SYSTEM ZUR VERBINDUNG EINES KANALS MIT EINEM PLATTENAUSGANG
SYSTEM FOR COUPLING A DUCT TO A SLAB OUTLET

(30) Priorité: 26.01.2004 FR 0400703
(43) Date de publication de la demande: 11.10.2006
(73) Titulaire: Bonne, Claude, 78870 Bailly (FR)
(72) Inventeur: Bonne, Claude, 78870 Bailly (FR)
(74) Mandataire: Novagraaf Technologies
(86) Numéro de dépôt international: PCT/FR2005/000170
(87) Numéro de publication internationale: WO 2005/080846

(56) Documents cités:
- DE-A- 3 740 487
- DE-U1- 8 615 470
- DE-U1- 8 632 274

## Description

La présente invention se rapporte au domaine des dispositifs et procédés pour la réalisation d'ouvrages neufs, tels que des pièces d'habitation, disposant en dalles de conduits d'alimentation en eau, électricité ou pour toutes autres applications. La présente invention se rapporte plus particulièrement à des dispositifs et installations pour le raccordement d'une gaine, tels qu'une canalisation flexible ou semi-rigide ou consistant en une conduite, à la sortie d'une dalle.

L'art antérieur connaît déjà le brevet français FR 2800838 et le brevet DE 86 32 274 U qui décrivent un dispositif de raccordement d'une gaine à la sortie d'une dalle, pour le guidage de canalisations flexibles, notamment de canalisations de fluide caloporteur, la gaine débouchant dans une réservation, c'est-à-dire un emplacement exempt de matière.

Ainsi, traditionnellement, pour faire sortir les canalisations d'une dalle béton, il est fait appel à la pose, sur treillis soudé, d'une (ou plusieurs) boîte(s) en carton recouverte(s) d'un sac plastique ou de boîte(s) de polystyrène taillée(s) dans les plaques d'épaisseurs diverses dans lesquelles sont introduits les fourreaux devant recevoir les canalisations après coup, ces boîtes étant fixées sur le treillis en utilisant du fil de fer. Dans cette technique couramment utilisée jusqu'alors, la précision de l'implantation de la boîte reste souvent très aléatoire.

Après coulage du béton, ces boîtes doivent être éliminées, entraînant des déchets qu'il faut évacuer, et recycler dorénavant de manière impérative, et reprendre au marteau piqueur quand les boîtes ont été déplacées par les personnels ayant travaillé au coulage de la dalle. Le passage des canalisations est effectué pour le polyéthylène par redressage, ou par reprise par soudure dans le sol dans le cas du cuivre. La sortie de dalle est assurée par des moyens divers. Après exécution de cette sortie, il est nécessaire de reconstituer la dalle de béton par coulage de ciment en place. L'ensemble de ces opérations entraînent des temps de main-d'oeuvre important, d'où des coûts de fabrication bien plus élevés.

La présente invention entend remédier aux inconvénients de l'art antérieur en proposant un système simple comprenant deux éléments, l'un constitué par le tube de raccordement et l'autre constitué par un élément destiné au placement précis dudit tube de raccordement. Ce système, une fois le tube et l'élément de placement mis en place et fixé l'un à l'autre, permet de couler directement le béton sans la nécessité d'une réservation pour finir l'ouvrage, sans nécessiter la mise en place de boîtes en carton ou en polystyrène qui doivent ensuite être enlevées. En effet, le système selon l'invention une fois mis en place, le coulage du béton se fait directement et complètement sans interruption comme dans l'art antérieur pour réaliser une réservation.

Pour ce faire, la présente invention concerne un système pour le raccordement d'une gaine, ou analogue, à la sortie d'une dalle, comportant un dispositif de sortie de dalles comprenant au moins un conduit se fixant par l'une de ses extrémités à la susdite gaine, caractérisé en ce qu'il comprend un dispositif de placement, sur lequel vient se fixer le dispositif de sortie de dalles, comprenant un moyen de positionnement pour positionner ledit dispositif de sortie de dalles par rapport à une ou plusieurs référence(s).

On entend par le terme de « références » n'importe quel élément fixe se trouvant dans le lieu où est mis en place le raccordement de la gaine et qui peut servir pour positionner correctement le raccordement, c'est-à-dire le dispositif de sortie de dalles, tels que par exemple des murs ou des cloisons.

Le dispositif de placement comprend également au moins un piétement destiné à le surélever et au moins un orifice. Bien entendu, ce dispositif pourra présenter une pluralité d'orifices. Ces orifices étant principalement destinés à permettre l'écoulement du béton, ou analogue, tout autour du dispositif de placement.

Selon un mode d'exécution de l'invention, le dispositif de placement pourra comprendre une protubérance supérieure venant en prise avec au moins une protubérance inférieure présente sur le dispositif de sortie de dalles.

Selon une possibilité offerte par l'invention, le moyen de positionnement consistera en au moins deux traits rectilignes d'axe.

Dans un mode de réalisation particulier de l'invention, le moyen de positionnement consistera en trois traits rectilignes d'axe.

Selon un mode d'exécution de l'invention, le dispositif de placement est fixé sur une planche de coffrage.

Avantageusement, le dispositif de sortie de dalles peut coulisser sur ledit dispositif de placement.

Selon un mode d'exécution de l'invention, le dispositif de sortie de dalles sera fixé au dispositif de placement par collage et/ou clipsage.

Selon un mode de réalisation de l'invention, l'extrémité formant fourreau présentera sur sa face intérieure des ailes, ou protubérances, et/ou un diamètre décroissant depuis sa périphérie libre. Ce cas sera particulièrement envisagé lorsque la gaine de la dalle présentera une extrémité cannelée. Ainsi, ces protubérances pourront consister en des éléments sensiblement élastiques venant en prise dans les cannelures pour bloquer en retour l'extrémité de la gaine et assurer l'étanchéité de la jonction.

Selon un autre mode de réalisation de l'invention, la face intérieure de l'extrémité formant fourreau est lisse et/ou présente un diamètre décroissant depuis sa périphérie libre.

Avantageusement, le dispositif de placement pourra comprendre au moins un moyen de fixation pour fixer, ou se fixer à, un autre dispositif de placement.

On comprendra mieux l'invention à l'aide de la description, faite ci-après à titre purement explicatif, de modes de réalisation de l'invention, en référence aux figures annexées:
- la figure 1 illustre une vue schématique latérale d'un dispositif de sortie de dalles et d'un dispositif de placement selon l'invention ;
- la figure 2 illustre les éléments de la figure 1, vus de face;
- la figure 3 illustre une vue en coupe du dispositif de sortie de dalles fixé à l'extrémité de la gaine, avec une canalisation, ou un tuyau, arrivant de la gaine et passant par le conduit dudit dispositif de sortie de dalles ;
- la figure 4 illustre une vue en coupe du dispositif de placement selon un mode de réalisation de l'invention;
- la figure 5 illustre une vue d'en haut du dispositif de placement ;
- la figure 6 illustre une vue de face de deux dispositifs de placement fixés l'un à l'autre sur lesquels sont fixés, pour l'un deux dispositif de sortie de dalles et pour l'autre un seul dispositif de sortie de dalles conforme à l'invention ;
- la figure 7 illustre une vue schématique latérale d'un dispositif de sortie de dalles et d'un dispositif de placement selon une variante de l'invention;
- la figure 8 illustre une vue schématique de haut d'un dispositif de sortie de dalle selon une autre variante de l'invention ;
- la figure 9 illustre une vue en coupe d'un dispositif de sortie de dalle selon encore une autre variante de l'invention;
- les figures 10 à 13 illustrent des manchons de raccord adaptés à être installés au niveau d'une entrée d'un dispositif de sortie de dalle selon la présente invention;
- la figure 14 illustre une rehausse adaptée à être installée au niveau d'une sortie d'un dispositif de sortie de dalle selon la présente invention;
- la figure 15 illustre une vis à gros pas pour une variante de fixation d'un dispositif de placement de dispositif de sortie de dalle selon l'invention; et
- la figure 16 illustre un fer à béton pour une autre variante de fixation d'un dispositif de placement de dispositif de sortie de dalle selon l'invention.

Le travail de l'homme du métier concernant le coulage du béton, mortier ou analogue est ici réalisé à l'identique de l'art antérieur, c'est-à-dire de manière classique. Un exemple de description de ce travail pourra être trouvé dans le brevet FR 2800838 précédemment cité, bien entendu, la réservation est ici non nécessaire ou exclue.

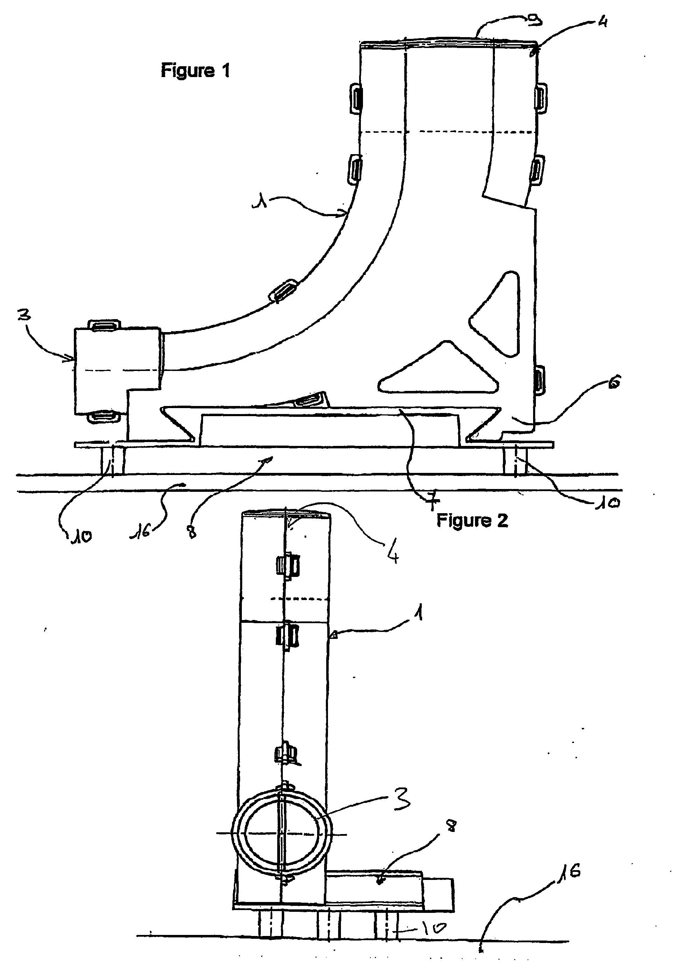

Comme illustré sur la figure 1, le dispositif de sortie de dalles 1 se présente sous la forme d'un L puisqu'il est destiné à raccorder une gaine 2, ou analogue, situé légèrement en dessous du sol à une conduite située au-dessus du niveau du niveau du sol, cette conduite pouvant être une conduite de desserte d'eau pour un robinet ou un radiateur, non représenté sur les figures annexées. Le dispositif de sortie de dalles 1 est un matériau synthétique, en général en plastique rigide tel que du polyuréthane.

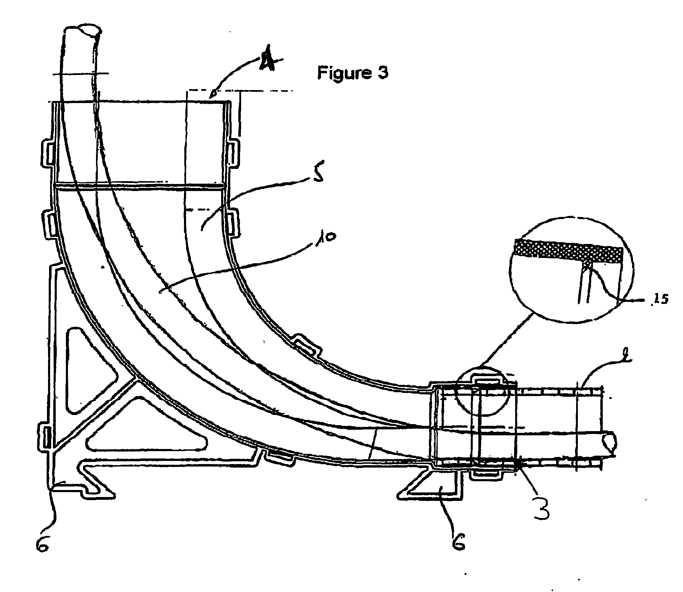

Le dispositif de sortie de dalles 1 comprend donc une entrée 3 située à l'une de ses extrémités, celle inférieure, pour le raccord à la gaine 2. Le dispositif 1 comprend également une sortie 4 située à l'autre extrémité, celle supérieure, destinée au raccord avec le conduit externe, non représenté sur les figures annexées. Ce dispositif 1 définit, entre l'entrée 3 et la sortie 4, un conduit courbé dans lequel peut passer une canalisation 10, ainsi qu'on le voit sur la figure 3.

L'entrée 3 a une section circulaire de diamètre adapté à recevoir la gaine 2. La sortie 4 a une section oblongue dont la largeur correspond au diamètre de l'entrée. Le conduit 5 s'évase donc entre l'entrée 3 et la sortie 4. La longueur de la section oblongue de la sortie est choisie de manière à ce que le rayon de courbure du conduit soit adapté au passage de la canalisation 10. Par exemple, le conduit 5 représenté permet le passage des canalisations en polyéthylène de diamètres (intérieur-extérieur) 10-12 mm, 13-16 mm et 16-20 mm.

Le rayon de courbure du conduit 5 du dispositif de sortie de dalles 1 permet d'obtenir le passage de la canalisation 10 sans intervention ou nécessité d'autre outillage. On pourra prévoir que le dispositif de sortie de dalles 1 comporte des évidements latéraux pour le passage du béton, afin d'obtenir une bonne cohésion de l'ensemble.

Le dispositif de sortie de dalles 1 comprend deux protubérances inférieures formant un guide de coulissement en queue d'aronde destiné à venir en prise avec le rail d'un dispositif de placement pour mettre en liaison ces deux dispositifs avec un degré de liberté en coulissement. Une vis de serrage (non représentée) intervenant entre ces deux dispositifs permet d'immobiliser complètement ces dispositifs l'un par rapport à l'autre.

En outre, le dispositif de sortie de dalles 1 comprend un bouchon 9 qui sera positionné sur l'orifice de sortie 4 afin d'éviter tout passage de béton lors du coulage, ou remplissage, de la réservation. Après coulage, ce bouchon 9 sera enlevé pour effectuer le raccord au conduit externe de la canalisation 10, ou du tuyau ou directement de l'orifice de sortie 4.

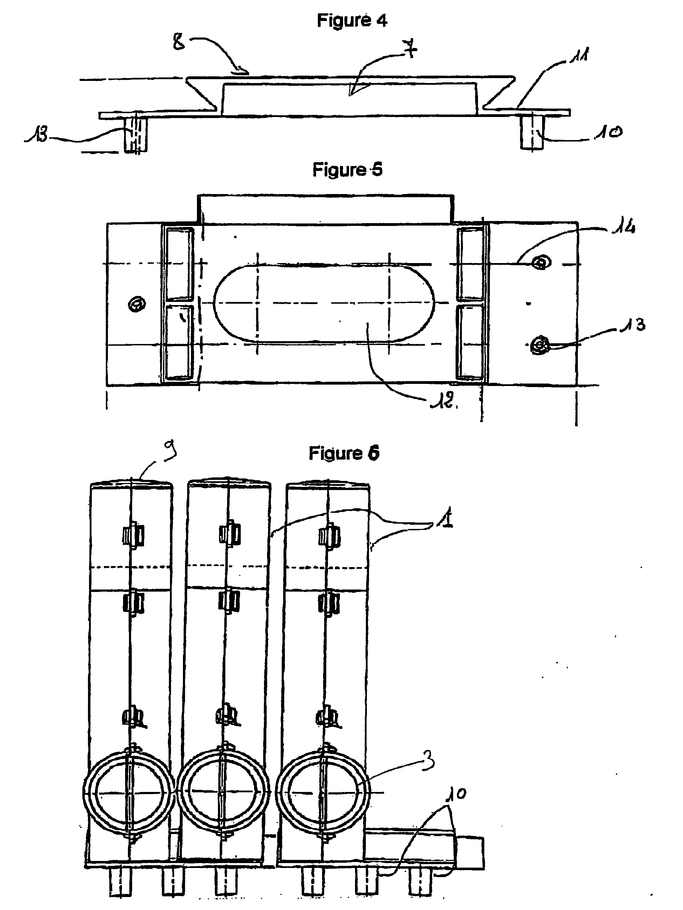

En référence aux figures 4 et 5, le dispositif de placement 8 consiste en un plateau 11 comportant un piétement 10 pour le surélever lorsqu'il est posé sur la planche de coffrage 16, non représentée sur les figures annexées. Ce piétement 10 consiste ici en de simples plots ou des longerons de support, réalisés dans la même matière que le plateau 11 ou dans une matière différente. Avantageusement, ce piètement vient de moulage avec le plateau 11. Cette surélévation du plateau 11 du dispositif de placement 8 permet au béton, ou analogue, de mieux couler en dessous pour autoriser une bonne finition sous dalle après coulage. La protubérance supérieure 7 en forme de queue d'aronde déjà décrite précédemment est ménagée sur la partie supérieure du plateau 11. Un orifice central 12 en forme de trou oblong permet au béton, ou analogue, de couler afin de parfaire l'ensemble. Le piétement 10, à savoir, en l'occurrence les plots, dispose d'orifices 13 longitudinaux pour recevoir des clous de fixation, autorisant la fixation du dispositif de placement 8 sur une planche de coffrage 16.

La protubérance supérieure 7 comprend un rail avec tenon et mortaise qui servent de système de fixation pour la fixation des dispositifs de placement 8 les uns aux autres. Ce rail permet l'assemblage de plusieurs dispositifs de placement 8 ensemble, par l'introduction du tenon dans la mortaise du dispositif de placement 8 suivant.

Le dispositif de placement 8 comprend dans l'exemple choisi pour illustrer l'invention deux traits d'axe qui forment le moyen de positionnement 14 du dispositif de sortie de dalles 1, par coulissement sur le rail 7, mais avant tout du dispositif de placement 8 lui-même. Ces traits 14, dont le nombre minimum est de deux, permettent à l'opérateur de placer correctement, tout d'abord le dispositif de placement 8 sur la planche de coffrage, puis le dispositif de sortie de dalles 1, par coulissement, sur le dispositif de placement 8. Une fois le dispositif 8 correctement placé sur la planche de coffrage, il est cloué au moyen de clous disposés dans les orifices 13. Une fois le dispositif de sortie de dalle correctement placé par coulissement, il est immobilisé au moyen de la vis de serrage (non représentée) qui intervient entre lui et le dispositif de placement 8. Les traits d'axe 14 sont ici gravés directement sur la face supérieure du dispositif de placement 8, mais on pourra bien sûr prévoir que ces traits 14 soient rapportés sur ladite surface par impression. De la même manière, tous types de moyens aptes à permettre le positionnement correct du dispositif de placement 8 pourra être envisagé, éventuellement sans nécessiter la prise en compte de références fixes présentes sur le lieu de l'ouvrage.

Ainsi qu'il a été décrit plus haut, l'entrée 3 du dispositif de sortie de dalle 1 se raccorde à l'extrémité libre d'une gaine 2. Ainsi qu'on le voit sur les figures 3, une lèvre, ou aile, flexible 15 est ménagée sur la paroi intérieure de l'entrée 3. Cette lèvre est adaptée à venir se loger dans un creux d'une gaine 2 de manière à assurer une bonne liaison et une étanchéité parfaite.

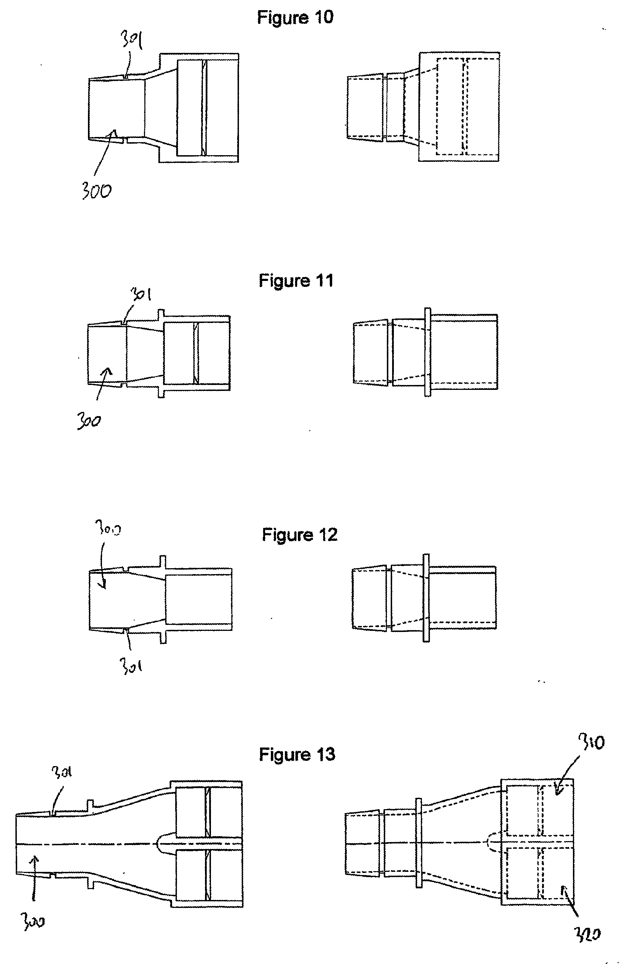

Alternativement, des embouts, dont des exemples sont représentés sur les figures 10 à 13, peuvent être emmanchés dans l'entrée 3 du dispositif de sortie de dalle de manière à permettre l'adaptation de cette sortie de dalle à tous diamètres de gaine. Chacun de ces embouts comprend une extrémité 300 adaptée à être emmanchée dans l'entrée 3. Cette extrémité 300 comprend une rainure circonférentielle 301 adaptée à recevoir la lèvre 15. Un de ces embouts, représenté sur la figure 13, permet de raccorder deux gaines à l'entrée de dalle. Bien entendu, on peut également concevoir des embouts permettant de raccorder une pluralité de gaines à l'entrée 3 du dispositif de sortie de dalle.

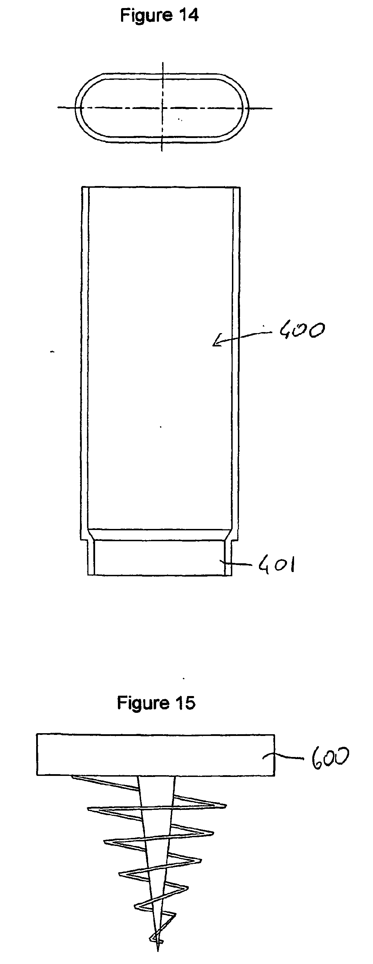

Une rehausse 400 représentée sur la figure 14 comprend une extrémité 401 adaptée à être emmanchée dans la sortie 4 du dispositif 1 afin de rehausser ce dernier.

Après coulage du béton, mortier ou analogue, le bouchon 9 est retiré et la canalisation 10, ou un tuyau, est introduite par l'orifice de sortie 4. Le système selon l'invention permet après exécution du coulage du béton et à n'importe quel moment l'interchangeabilité de la canalisation 10, ou du tuyau, en polyéthylène sans avoir recours au piochement de la dalle.

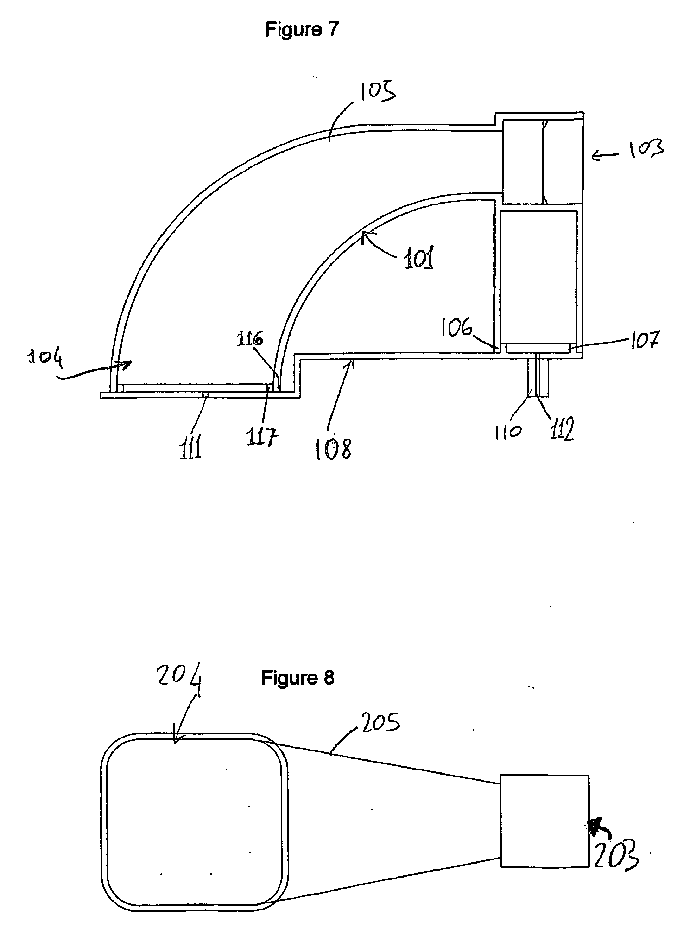

Selon un mode de réalisation représenté sur la figure 8, un conduit 205 pour présenter une forme évasée non seulement dans une direction longitudinale, mais également dans une direction transversale, de sorte que la sortie 204 est plus grande que l'entrée 3 dans les deux directions et présente une forme sensiblement rectangulaire.

La forme évasée d'un conduit permet de faire ressortir deux canalisations 10, ou tuyaux, du même conduit 5 et d'obtenir un écartement à la sortie d'au moins 50 millimètres.

Selon un autre mode de réalisation de l'invention, le conduit 10 courbe du dispositif de sortie de dalles 1, dans le cas de canalisations en cuivre et du fait de l'impossibilité de les passer après coup, la partie du conduit externe à la fin de l'ouvrage, c'est-à-dire après coulage du béton, mortier ou analogue, sera réalisée en demi-coquille, de sorte qu'après le passage de la canalisation 10 de cuivre, on viendra clipser la partie complémentaire de la demi-coquille. Le conduit 5 sera recoupé, dans sa partie supérieure, par exemple de 4 centimètres de moins que l'épaisseur du plancher afin de recevoir un bouchon de forme conique sur l'orifice de sortie 4, de façon à l'extraire du béton. Le bouchon 9 comportera une cavité intérieure de façon à permettre le passage de la canalisation 10 à l'intérieur du conduit 5. Cette technique permet de reprendre la canalisation 10 en cuivre par soudure au niveau de la dalle et non en pleine dalle.

Selon un autre mode de réalisation de la présente invention, représenté sur la figure 7, un dispositif de sortie de dalle 101 comprend une entrée 103 qui se trouve au-dessus de la dalle, sa sortie 104 se trouvant au-dessous de la dalle. Autrement dit, la sortie 104, vers laquelle le conduit 105 du dispositif de sortie de dalle 101 s'évase, se trouve au niveau d'un dispositif de placement 108 adapté à être fixé sur la planche de coffrage, au fond de la réservation. Le dispositif de placement 108 comprend deux rails 107 et 117 avec lesquels viennent coopérer deux guides 116 et 106 qui se trouvent respectivement au niveau de la sortie 104 et à l'aplomb de l'entrée 103. Un piétement 110 est ménagé sous le dispositif de placement 108, au niveau du rail 107. Ce piètement comprend au moins un orifice 112 permettant le passage d'un clou de fixation à la planche de coffrage. Au moins un autre orifice 111 est ménagé à côté de la sortie 104.

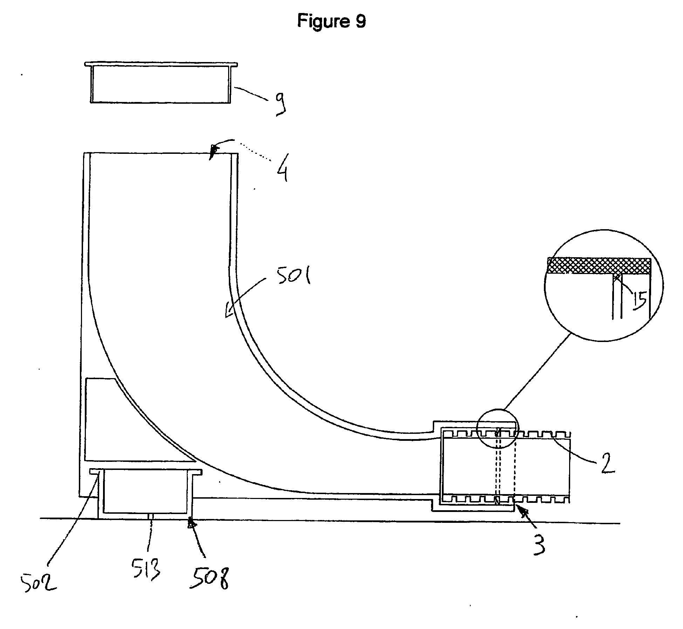

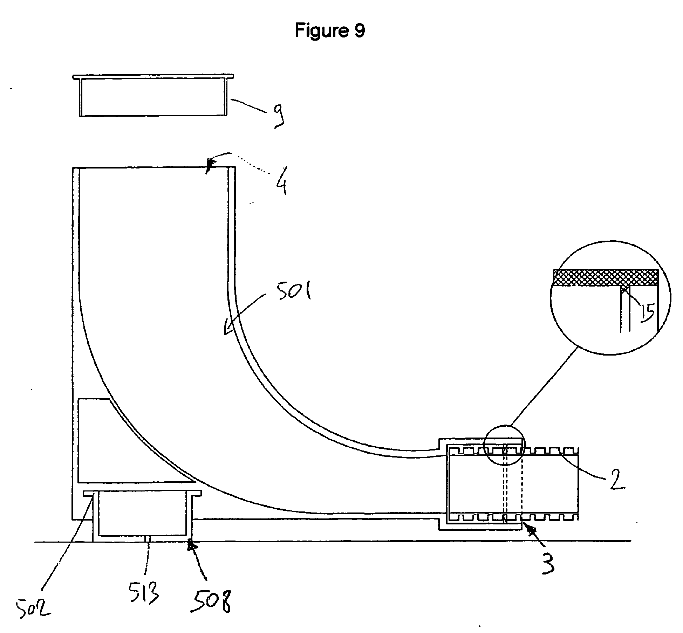

Selon un autre mode de réalisation de la présente invention, représenté sur la figure 9, un dispositif de placement 508 est constitué par un rail fixé sur la planche de coffrage, par exemple au moyen de clous traversant par des orifices 513 ménagés à cet effet. Le dispositif de sortie de dalle 501 comprend une glissière 502 adaptée à venir en prise avec le rail 508. La fixation définitive peut, par exemple, être réalisée au moyen d'une vis de serrage (non représentée).

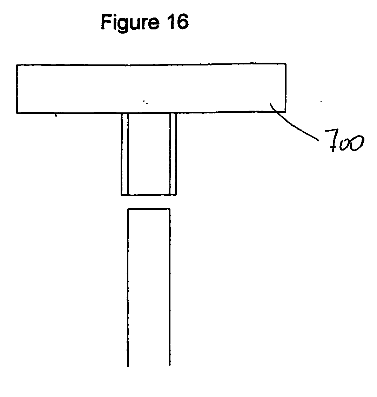

Selon des variantes de réalisation de la présente invention, la fixation du dispositif de placement est réalisée, pour la fixation dans le polystyrène, au moyen d'une vis à gros pas telle que la vis 600 représentée sur la figure 15. Elle peut également être réalisée au moyen d'un fer à béton 700 tel que celui représenté sur la figure 16.

L'invention est décrite dans ce qui précède à titre d'exemple. Il est entendu que l'homme du métier est à même de réaliser différentes variantes de l'invention, en particulier concernant les dimensions et les formes des différents éléments du système, sans pour autant sortir du cadre du brevet.

## Revendications

1. Système pour le raccordement d'une gaine (2), ou analogue, à la sortie d'une dalle, comportant:
- un dispositif de sortie de dalles (1 ; 101; 501) comprenant au moins un conduit courbé en forme de L (5; 105) comportant une extrémité supérieure (4) et une extrémité inférieure (3) formant fourreau pour le raccord à la susdite gaine (2),
- un dispositif de placement (8; 108; 508), sur lequel vient se fixer le dispositif de sortie de dalles, comprenant un moyen de positionnement (14) pour positionner ledit dispositif de sortie de dalles (1) par rapport à un ou plusieurs éléments fixes de référence;
ledit système étant **caractérisé en ce que** le dispositif de placement (8; 108 ; 508) comprend au moins un piétement (10) destiné à le surélever et un orifice (12) central permettant au béton ou analogue de couler.

2. Système selon la revendication 1, **caractérisé en ce que** le dispositif de placement (8 ; 108 ; 508) comprend une protubérance supérieure (7 ; 107, 117) venant en prise avec au moins une protubérance inférieure (6 ; 106, 116) présente sur le dispositif de sortie de dalles (1 ; 101; 501).

3. Système selon la revendication 1 ou 2, , **caractérisé en ce que** le moyen de positionnement (14) consiste en au moins deux traits rectilignes.

4. Système selon la revendication 3, **caractérisé en ce que** le moyen de positionnement (14) consiste en trois traits rectilignes.

5. Système selon l'une quelconque des revendications précédentes, **caractérisé en ce que** le dispositif de placement (8; 108; 508) est fixable sur une planche de coffrage.

6. Système selon l'une quelconque des revendications précédentes, **caractérisé en ce que** le dispositif de sortie de dalles (1 ; 101; 501) peut coulisser sur le dispositif de placement (8 ; 108 ; 508).

7. Système selon l'une quelconque des revendications précédentes, **caractérisé en ce que** le dispositif de sortie de dalles (1 ; 101 ; 501) est fixé au dispositif de placement (8 ; 108 ; 508) par serrage.

8. Système selon l'une quelconque des revendications précédentes, **caractérisé en ce que** l'extrémité (3) formant fourreau présente sur sa face intérieure des ailes (15) et/ou un diamètre décroissant depuis sa périphérie libre.

9. Système selon l'une quelconque des revendications 1 à 9, **caractérisé en ce que** la face intérieure de l'extrémité (3) formant fourreau est lisse et/ou présente un diamètre décroissant depuis sa périphérie libre.

10. Système selon l'une quelconque des revendications précédentes, **caractérisé en ce que** le dispositif de placement (8; 108; 508) comprend au moins un moyen de fixation pour fixer, ou se fixer à, un autre dispositif de placement.

11. Système selon l'une quelconque des revendications précédentes, **caractérisé en ce qu'**un embout (300) est raccordé de manière amovible à ladite extrémité formant fourreau (3).

12. Système selon l'une quelconque des revendications précédentes, **caractérisé en ce que** l'extrémité supérieure de sortie (4 ; 104 ; 204) est de section ayant au moins une dimension supérieure à la section de ladite extrémité (3) formant fourreau.

13. Système selon la revendication 12, **caractérisé en ce que** ladite extrémité de sortie (204) est de section ayant ses deux dimensions supérieures à celles de la section de ladite extrémité (3) formant fourreau.

14. Système selon l'une quelconque des revendications précédentes, **caractérisé en ce que** ledit dispositif de placement (508) est un rail.

15. Système selon l'une quelconque des revendications précédentes, **caractérisé en ce qu'**une rehausse (400) est raccordée de manière amovible à l'extrémité supérieure de sortie (4 ; 104 ; 204).

16. Système selon l'une quelconque des revendications 1 à 15, **caractérisé en ce que** le conduit (5 ; 105) présente une section d'entrée (3) circulaire de diamètre adapté à recevoir la gaine (2) et une section de sortie (4) oblongue dont la largeur correspond au diamètre de la section d'entrée (3).

## Claims

1. A system for connecting a sheath (2), or similar, with the outlet of a slab, including:
- a slab outlet device (1; 101; 501) including at least an L-shaped bent duct (5; 105) including an upper end (4) and a sheath-forming lower end (3) for the connection to the above-mentioned sheath (2),
- a positioning device (8; 108; 208) whereon the slab outlet device is fixed, which includes positioning means (14) for positioning said slab outlet device (1) with respect to one or several reference fixed element(s);
said system being **characterized in that** the positioning device (8; 108; 208) includes at least one leg (10) intended to raise it and a central hole (12) enabling the concrete or similar to be cast.

2. A system according to claim 1, **characterized in that** the positioning device (8; 108; 508) includes an upper protrusion (7; 107; 117) engaging at least one lower protrusion (6; 106; 116) existing on the slab outlet device (1; 101; 501).

3. A system according to claim 1 or 2, **characterized in that** the positioning means (14) consists of at least two rectilinear lines.

4. A system according to claim 3, **characterized in that** the positioning means (14) consists of three rectilinear lines.

5. A system according to any one of the preceding claims, **characterized in that** the positioning device (8; 108; 508) can be fixed onto a shuttering board.

6. A system according to any one of the preceding claims, **characterized in that** the slab outlet device (1; 101; 501) can slide on the positioning device (8; 108; 508).

7. A system according to any one of the preceding claims, **characterized in that** the slab outlet device (1; 101; 501) is fixed to the positioning device (8; 108; 508) by screwing.

8. A system according to any one of the preceding claims, **characterized in that** the sheath-forming end (3) has wings (15) on the inner face thereof and/or a diameter decreasing from the free end thereof.

9. A system according to any one of claims 1 to 9, **characterized in that** the internal face of the sheath-forming end (3) is smooth and/or has a diameter decreasing from the free end thereof.

10. A system according to any one of the preceding claims, **characterized in that** the positioning device (8; 108; 508) includes at least fixing means to fix or to be fixed to another positioning device.

11. A system according to any one of the preceding claims, **characterized in that** an end piece (300) is removably connected to said sheath-forming end (3).

12. A system according to any one of the preceding claims, **characterized in that** the upper outlet end (4; 104; 204) has a section at least one dimension of which is greater than the section of said sheath-forming end (3).

13. A system according to claim 12, **characterized in that** said outlet end (204) has a section with two dimensions greater than those of the section of said sheath-forming end (3).

14. A system according to any one of the preceding claims, **characterized in that** said positioning device (508) is a rail.

15. A system according to any one of the preceding claims, **characterized in that** a riser block (400) is removably connected to the outlet end (4; 104; 204).

16. A system according to any one of claims 1 to 15, **characterized in that** the duct (5; 105) has a circular inlet section (3) with a diameter adapted for receiving the sheath (2) and an oblong outlet section (4), the width of which corresponds to the diameter of the inlet section (3).

## Patentansprüche

1. System für den Anschluss eines Leitungskanals (2) oder analog am Austritt einer Bodenplatte, das folgende Teile umfasst:
- eine Vorrichtung zum Austritt aus der Bodenplatte (1; 101; 501) mit mindestens einem gekrümmten Leitungsrohr in L-Form (5; 105), das ein oberes Ende (4) und ein ein Hüllrohr für den Anschluss an den oben besagten Leitungskanal (2) bildendes unteres Ende (3) umfasst;
- eine Positionierungsvorrichtung (8; 108; 508), auf der die Vorrichtung zum Austritt aus der Bodenplatte (1) befestigt wird, die ein Positionierungsmittel (14) für das Positionieren der besagten Vorrichtung zum Austritt aus der Bodenplatte (1) im Verhältnis zu einem oder mehreren fixen Referenzelementen umfasst;
Wobei das besagte System **dadurch gekennzeichnet ist, dass** die Positionierungsvorrichtung (8; 108; 508) zumindest einen Sockel (10) umfasst, der dazu bestimmt ist, sie anzuheben, und eine zentrale Öffnung (12) für das Gießen des Betons oder eines analogen Materials.

2. System nach Anspruch 1, **dadurch gekennzeichnet, dass** die Positionierungsvorrichtung (8; 108; 508) eine obere Protuberanz (7; 107; 117) umfasst, die in zumindest eine untere Protuberanz (6; 106; 116) eingreift, die auf der Vorrichtung zum Austritt aus der Bodenplatte (1; 101; 501) vorhanden ist.

3. System nach Anspruch 1 oder 2, **dadurch gekennzeichnet, dass** das Positionierungsmittel (14) aus zumindest zwei geradlinigen Strichen besteht.

4. System nach Anspruch 3, **dadurch gekennzeichnet, dass** das Positionierungsmittel (14) aus drei geradlinigen Strichen besteht.

5. System nach einem beliebigen der vorstehenden Ansprüche, **dadurch gekennzeichnet, dass** die Positionierungsvorrichtung (8; 108; 508) auf einem Schalbrett fixierbar ist.

6. System nach einem beliebigen der vorstehenden Ansprüche, **dadurch gekennzeichnet, dass** die Vorrichtung zum Austritt aus der Bodenplatte (1; 101; 501) auf der Positionierungsvorrichtung (8; 108; 508) gleiten kann.

7. System nach einem beliebigen der vorstehenden Ansprüche, **dadurch gekennzeichnet, dass** die Vorrichtung zum Austritt aus der Bodenplatte (1; 101; 501) auf der Positionierungsvorrichtung (8; 108; 508) durch Verankerung befestigt ist.

8. System nach einem beliebigen der vorstehenden Ansprüche, **dadurch gekennzeichnet, dass** das Ende (3), das ein Hüllrohr bildet, auf seiner Innenfläche Flügel (15) und/oder einen sich ab seiner freien Peripherie verjüngenden Durchmesser aufweist.

9. System nach einem beliebigen der vorstehenden Ansprüche 1 bis 9, **dadurch gekennzeichnet, dass** die Innenfläche des ein Hüllrohr bildenden Endes (3) glatt ist und/oder einen sich ab seiner freien Peripherie verjüngenden Durchmesser aufweist.

10. System nach einem beliebigen der vorstehenden Ansprüche, **dadurch gekennzeichnet, dass** die Positionierungsvorrichtung (8; 108; 508) zumindest ein Mittel zur Fixierung aufweist, mit dem es an einer anderen Positionierungsvorrichtung/mit dem eine andere Positionierungsvorrichtung fixiert werden kann.

11. System nach einem beliebigen der vorstehenden Ansprüche, **dadurch gekennzeichnet, dass** ein Ansatzstück (300) abnehmbar am ein Hüllrohr bildenden Ende (3) angeschlossen ist.

12. System nach einem beliebigen der vorstehenden Ansprüche, **dadurch gekennzeichnet, dass** das obere Ausgangsende (4; 104; 204) einen Querschnitt hat, dessen mindestens eine Abmessung grösser als der Querschnitt des besagten Endes (3) ist, das ein Hüllrohr bildet.

13. System nach Anspruch 12, **dadurch gekennzeichnet, dass** das besagte Ausgangsende (204) einen Querschnitt mit mindestens zwei Abmessungen grösser als diejenigen des Querschnitts des besagten Endes (3) hat, das ein Hüllrohr bildet.

14. System nach einem beliebigen der vorstehenden Ansprüche, **dadurch gekennzeichnet, dass** die besagte Positionierungsvorrichtung (508) eine Schiene ist.

15. System nach einem beliebigen der vorstehenden Ansprüche, **dadurch gekennzeichnet, dass** ein Ständer (400) abnehmbar an das obere Ausgangsende (4; 104; 204) angeschlossen ist.

16. System nach einem beliebigen der vorstehenden Ansprüche 1 bis 15, **dadurch gekennzeichnet, dass** das Leitungsrohr (5; 105) einen kreisförmigen Eintrittsquerschnitt (3) mit einem Durchmesser aufweist, der geeignet ist, den Leitungskanal (2) aufzunehmen, und einen länglichen Ausgangsquerschnitt (4), dessen Breite dem Durchmesser des Eintrittsquerschnitts (3) entspricht.
